# EUROPEAN PATENT SPECIFICATION

(11) **EP 2 114 057 B1**
(45) Date of publication and mention of the grant of the patent: **26.12.2012**
(21) Application number: 08397509.4
(22) Date of filing: 29.04.2008
(51) Int. Cl.: H04L 29/12, H04M 1/253, H04L 29/08

(54) **An apparatus, a system and a method for forming a connection in an interconnection environment**
Vorrichtung, System und Verfahren zur Bildung einer Verbindung in einer Verbindungsumgebung
Appareil, système et procédé pour former une connexion dans un environnement d'interconnexion

(43) Date of publication of application: 04.11.2009
(73) Proprietor: Teliasonera AB, 106 63 Stockholm (SE)
(72) Inventor: Jalkanen, Tero, 04340 TUUSULA (FI); Weckman, Jari, 37560 LEMPÄÄLÄ (FI)
(74) Representative: Rahkonen, Erkki Juhani

(56) References cited:
- EP-A- 1 646 213
- WO-A-2008/010872
- DE-A1-102006 012 310

## Description

### Field of the Invention

The present invention relates to an apparatus, a system and a method for forming a connection to a receiving node in an interconnection environment comprising a mixture of different protocols.

### Background of the Invention

At the time the present application is written the voice interconnection environment is going through a transition. Multiple operators are switching from existing SS7/TDM (Signalling System 7/Time-division Multiplexing) solution to more efficient IP (Internet Protocol) based network, such as IPX (Internet Packet Exchange). In this transition, the operators are replacing their traditional MSC (Mobile Switching Center) voice switches with IP based soft switches or servers, such as MSC-S (Mobile Switching Center - Server) and/or IMS (IP Multimedia Subsystem).

In this kind of a development successfully transporting voice traffic (or any other kind, e.g. video, text) becomes increasingly complex due to a number of new options the recipient operator and the interconnection carrier might be using. Therefore, number of things need to be found out before the traffic can be sent. For example, capabilities of the other end should be known, i.e. is the other end using MSC, MSC-S, IMS or some general SIP (Session Initiation Protocol) based VoIP (Voice over IP) server? These nodes are different and use different protocols or variants, which means that they are not interoperable without any conversion. Also different codecs/formats can be utilized regarding the media. In addition, optimal means to reach the other end should be known, i.e. does the other end use SS7/TDM network or IP for interconnection? Similarly, does the other end use IPX or some other IP network?

Among the others, there will be operators that use multiple different nodes (e.g. both MSC-S and IMS) and networks (e.g. both SS7/TDM and IPX) at the same time, thus adding even more complexity into this area. For example, the basic voice service can be offered at the same time via IMS, MSC-S and MSC nodes and all of these can be connected to other operators using variety of different protocols.

At present, SS7/TDM is generally used for voice interconnection, and therefore interests for developing a solution for future voice interconnection have been tepid. IMS and MSC-S nodes are just being deployed, and therefore commercial interconnection has not yet taken place. However, without any solution to the problem, the future commercial interconnection connections can become very difficult to set up in an optimal way, because there are so many different options.

D1: WO 2008/010872 discloses a point-to-point type contact establishment method that utilizes a priority list if the connection attempt is unsuccessful. If the initial VoIP call establishment fails, the caller may choose an alternate connection method, such as email, IM, fax, and/or web. However, if the voice connection fails, D1 does not offer another solution to establish a voice call.

D2: EP 1646213 also discloses a point-to-point type contact establishment method providing alternative means for communication, if the initial voice connection request is failed. Thus, D2 proposes a reachability solution, wherein alternative methods for communication, such as email or a secondary subscription number, are offered to reach the receiver, if the receiver is busy.

D3: DE 102006012310 A1 discloses expanding an ENUM query to several concurrent ENUM queries to ENUM trees in different domains. The responses to the ENUM queries are gathered and listed according to a policy, after which the responses are returned to the client. This fastens finding a correct node and shortens the delay occurring in connection set-up compared to successive ENUM queries. The publication does not disclose interconnection between operators especially in a situation where several protocols are used simultaneously and where a connection node using a suitable protocol needs to be found.

Therefore what is needed, is a solution that will take into account the challenges the present development brings along. This invention is addressed to such a need.

### Summary of the Invention

Various aspects of the invention include an apparatus, a system and a method, which are characterized by what is stated in the independent claims. Various embodiments of the invention are disclosed in the dependent claims.

A first aspect relates to an apparatus for forming a voice connection to a receiving node in an inter-operator interconnection environment comprising a mixture of different protocols suitable for voice transmission, one of the protocols being SS7.

The apparatus is configured to receive a telephone number from an originating node, to receive, as a response to an ENUM query performed for the telephone number, multiple NAPTR records, each corresponding to a receiving node and to select a receiving node to which the voice connection is to be established from the group of receiving nodes pointed by the NAPTR records, wherein said selection is based on rules set on a table the apparatus (210) has access to.

According to another example, the apparatus is capable of determining a priority order for the receiving nodes by means of the NAPTR records.

According to yet another example, the apparatus is able to select the receiving node to which the connection is to be established based on the priority order.

According to yet another example, the apparatus is capable of going through the receiving nodes substantially simultaneously.

According to yet another example, the apparatus is capable of going through the NAPTR records one after the other according to the priority order.

According to yet another example, the apparatus is capable of intercepting the telephone number from the originating node.

According to yet another example, the apparatus is capable of detecting the received telephone number from signalling comprising at least one of the following: ENUM/DNS query, SIP INVITE, responses.

According to yet another example, the apparatus is located between service nodes and inter-operator network. The apparatus may also be located within a carrier providing the inter-operator network. Regardless of the location of the apparatus, the apparatus may always ensure that the original source operator is visible throughout the whole chain of connection (end-to-end), in order for the recipient operator to send the traffic back to the correct originator operator.

According to yet another example, the apparatus is configured to determine an IP address for a receiving node by means of the NAPTR record.

According to yet another example, the apparatus is configured to operate for voice service.

The present invention also relates to a method for forming a voice connection to a receiving node in an inter-operator interconnection environment comprising a mixture of different protocols suitable for voice transmission, one of the protocols being SS7.

The method is mainly characterized in that the method comprises receiving a telephone number from an originating node, receiving, as a response to an ENUM query performed for the telephone number, multiple NAPTR records, each corresponding to a receiving node and select a receiving node to which the voice connection is to be established from the group of receiving nodes pointed by the NAPTR records, wherein said selection is based on rules set on a table being accessed to.

Thanks to the present invention, the operator or the carrier is able to acquire information on the capabilities of the receiving operator in order to use the correct mechanism to reach the recipient in an environment where multiple different nodes/platforms may offer the same basic voice service. The capabilities of the receiving operator are available to a resolver node, called IWBF (Interworking Border Function). NAPTR (Naming Authority Pointer) records of the receiving operators are used for determining the capabilities since the receiver puts only those records online that are available for it. FQDN (Fully Qualified Domain Name) (e.g. msc-s.operator.com) will indicate the receiving node.

Network used to reach the receiving operator is handled by an originator priority list. For example, the priority list may indicate that TDM breakout by the originator may be least preferred one, so IPX may always be at least tried beforehand.

The present solution does not necessarily require any kind of update for standard network nodes (e.g. IMS core and MSC-s) that the operators are already using, because the solution can be separated from those.

### Description of the Drawings

The present invention is described in more detailed manner by the examples presented in the following disclosure and drawings, where
- Figure 1: illustrates an example of multi-operator environment forming background for the present invention, and
- Figure 2: illustrates an example of the invention for voice interworking.

### Detailed Description of the Invention

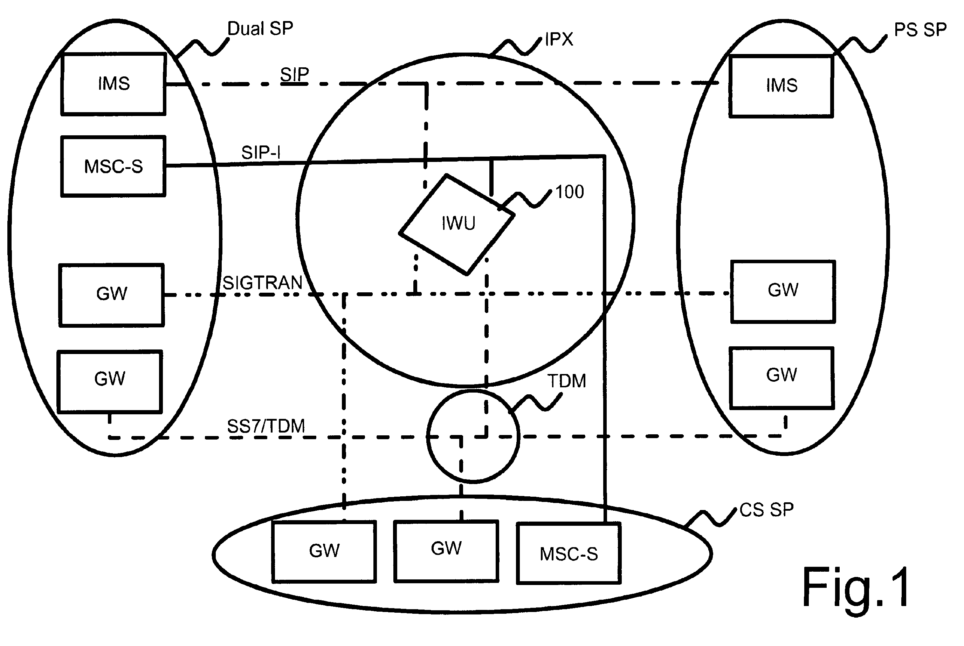

Figure 1 illustrates a simplified architecture of a multi-operator environment comprising mixture of different protocols. Figure 1 presents multiple different nodes and means to reach them. The purpose of figure 1 is to illustrate the complexity of future telecommunication network and e.g. the difficulties in connecting nodes of different protocols as discussed above. In figure 1 a component called IWU (Interworking Unit) (100) is illustrated. This component is shown for illustrative reasons, and is not within the scope of the present invention. As will be later discussed, the present invention is mainly targeted to actions taking place before the IWU (100). It should be also noted, that IWU, in figure 1, is described to be a general node capable of doing almost anything. The figure 1 shows a simplified model where everything is outsourced to IPX or other IP inter-operator network being used as connection protocol. However, the skilled person will appreciate that the reality may be somehow different. It should be noted from figure 1 that IWU (100) may or may not exist in IPX. Also that service provider SP may or may not have IWU itself. Further what should be noted, is that IWU may or may not have all the capabilities shown in the figure 1. Figure 1 presents Dual Service Provider (Dual SP), an IPX, a Packet Switched Service Provider (PS SP), a Circuit Switched Service Provider (CS SP) and a TDM. It can be realized from figure 1 that nodes using the same connection protocol (e.g. IPX) can reach each others directly, but when trying to reach a node via different protocol (e.g. TDM), an IWU (100) must be used for conversion.

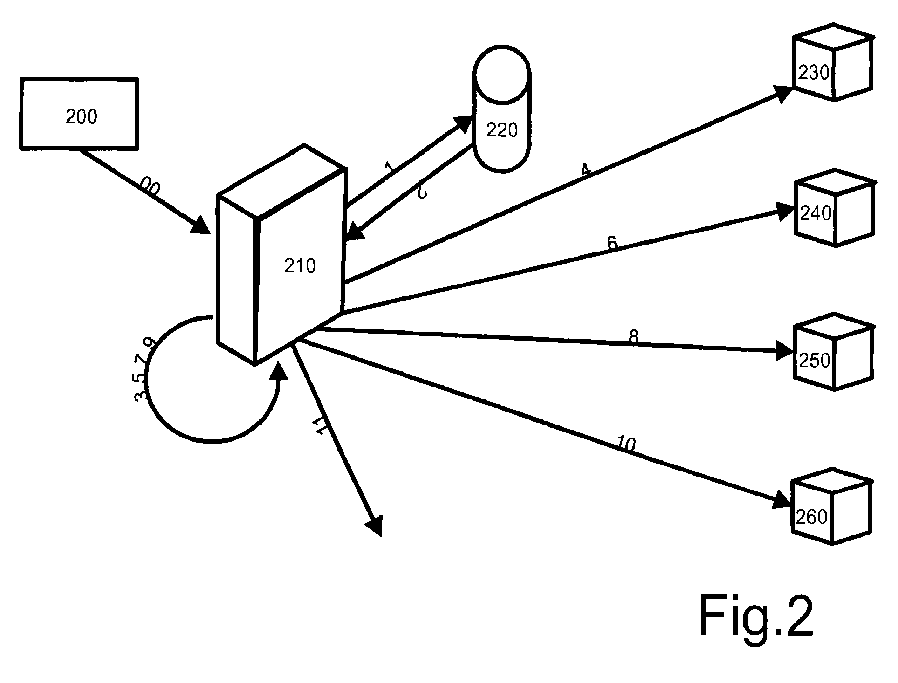

Fig. 2 depicts an example of a network architecture suitable for implementing the arrangement according to the invention. The main component in this arrangement is a node called IWBF resolver (210) which is a node that can be located - when utilized by an originating operator - between the actual service nodes/servers, such as MSC-S and IMS core, and IPX; or that can be located within the carrier that is providing the inter-operator network, such as IPX. This means that mobile operator itself can have the IWBF resolver deployed or the IWBF resolver can be offered by an IPX carrier for its operator customers. The IWBF resolver can also be a separate network node or it can be built e.g. in MSC-S or S-CSCF (Serving-Call Session Control Function) nodes, as well as more general operator border node like SBC (Session Border Controller). The IWBF resolver is suitable for IPX but is not related only to IPX, which means that the IWBF resolver can be utilized in any other inter-operator connectivity option too.

The IWBF resolver (210) is capable of performing the standard ENUM/DNS (Telephone Number Mapping (also referred as Electronic Numbering and E.164 Number Mapping) Domain Name System) resolver functions. In addition to those, the IWBF (210) can perform more intelligent functions, such as making decisions based on the originating node information, receiving node information and the priority list configured by the originating operator. Priority list is a table or small database used by IWBF resolver (210). The intention is to allow the originating operator to set rules for prioritizing traffic according to its own rules, processes, technical reasons or commercial grounds. The format and details of the priority list is not discussed here in greater extent, because its content is irrelevant for the present invention. What does matter, is that the IWBF resolver (210) should be able to see from the list what kind of traffic is directed to which node. For example, the priority list may indicate that INVITE should be routed to the receiving IMS before trying receiving MSC-S.

The IWBF resolver (210) is able to distinguish the actual originating node (whether it is MSC-S or IMS or some other). This can be based on a table the IWBF resolver can have access to. The table may be built-in in the priority table but it can also be a separate one. This kind of table can utilize e.g. IP addresses of the originating nodes or information within signaling (such as INVITE). Whenever IWBF resolver receives a query, it is arranged to check the table to see which node is asking. This information will be then used in the later phase for making decision.

As mentioned above, the IWBF resolver is capable of performing the standard ENUM/DNS resolver functions. The standard ENUM/DNS resolver functions include receiving a telephone number of the recipient, converting the telephone number to ENUM number according to known conversion method (telephone number are reversed and separated with dots, and e164.arpa suffix is added to the end or the string). After this the resolver connects the name server, which returns one or more NAPTR's of the recipient. By means of the NAPTR, an IP address of the recipient can be inquired from the name server. There are basically two models for IWBF resolver functioning with the originating nodes. In the first model, the originating nodes function in their normal way making ENUM/DNS queries by themselves. In the second model the originating nodes always forward ENUM/DNS queries to IWBF resolver.

In the first model, the IWBF resolver is configured to intercept all outgoing and incoming ENUM/DNS queries as well as signaling traffic (such as SIP INVITE and responses). This means that the IWBF resolver acts as an originating node e.g. in the scenario where MSC-S has sent INVITE to recipient Node X, but actually Node Y should have been used. Therefore IWBF resolver delays forwarding the reply to MSC-S until it receives a successful one. IWBF resolver has to set session aware in this scenario, in order to remember which response it actually mapped to which query/session invite. In this model the originating nodes might not even be aware of the IWBF resolver existing at all since it is acting in transparent mode.

In the second model, IWBF resolver is a known network element to the origination nodes, which always forward the task of performing ENUM/DNS queries to IWBF resolver.

In figure 2 the network architecture comprises the IWBF resolver (210) (later "IWBF") for inter-operator connection. A skilled person appreciates that in addition to the elements shown in figure 2, various implementations of the network comprise a great number of other network elements as well, but the appreciation of the invention does not require that these elements should be disclosed herewith. It should be noted that there is Network-to-Network Interface between the IWBF and destination nodes.

In figure 2, numerals 00 to 11 represent the steps for typical multi-node scenario between operators performed by the IWBF. These steps are specified in the following:
00: The IWBF (210) receives a phone number from an originating node (200) to which the originating node wants to be connected.
1: The IWBF (210) sends an ENUM query to a ENUM/DNS name server (220)
   *Give me NAPTR of phone number +358401234567*
2: The IWBF (210) gets answer with multiple NAPTR records
   *user@MSC-S.op2.fi.gprs **
   *user@IMS.op2.fi.gprs* **
   *user@Sigtran.op2.fl.gprs* ***
   *user@TDM-gw.op2.fi.gprs* ****
   * indicates that this node (230) is a MSC-Server
   ** indicates that this node (240) is a part of IMS core system
   *** indicates that this node (250) must be connected via SIGTRAN protocol
   **** TDM break-in node (260) that must be connected via IP based network
3: IWBF (210) selects the best possible NAPTR record to solve the receiving IP address with DNS query (the query is performed just like in step 1 and 2). *Give me SRV (or similar) record of MSC-S.op2.fi.gprs*
   The selection for the best possible NAPTR is based on an analysis the IWBF (210) makes on the sender and NAPTR records based on the priority list. The answer to the DNS query is one IP address instead of bunch of NAPTR records
4: The IWBF (210) sends SIP INVITE to received IP address of MSC-S node (230)
   *INVITE USER@ to session*
   If the session can be established the following steps (5 to 11) are not needed. If the answer is "reject", then the next step is taken.
5: With own priority list and received NATPR records, the IWBF (210) chooses the second best option to establish a connection
   *Give me SRV (or some similar) record or IMS.op2.fi.gprs*
6: The IWBF (210) sends invite to received IP address of CSCF (Call Session Control Function) node (240) in IMS
   *invite USER@ to session*
   If the session can be established the following steps (7 to 11) are not needed. If the answer is "reject", then the next step is taken.
7. With own priority list and received NATPR records, the IWBF (210) chooses the third best option to establish a connection
   *Give me SRV (or some similar) record or sigtran.op2.fi.gprs*
8: The IWBF (210) sends invite to received IP address to a gateway (250) for Sigtran protocol
   *invite USER@ to session*
   If the session can be established the following steps (9 to 11) are not needed. If the answer is "reject", then the next step is taken.
9: With own priority list and received NATPR records, the IWBF (210) chooses the next best option to establish a connection
   *Give me SRV (or some similar) record or tdm-gw.op2.fi.gprs*
10: The IWBF (210) sends invite to received IP address for TDM gateway (260)
   *invite USER@ to session*
   If the session can be established the following step is not needed. If the answer is "reject", then the next step is taken.
11. When the IWBF (210) has gone through all of NAPTR's or it's priority list, it will send invite to own TDM network for traditional session setup (used as a last resort)

It is possible to execute the steps 4 to 10 simultaneously, but in that case IWBF (210) needs to wait answers from higher priority nodes before establishing session after acceptance messages from lower priority equipments. If lower priority equipments send acceptance and higher priority equipment is used, the IWBF (210) needs to send session termination to all those lower priority equipments that have been accepted session.

The previously described scenario assumes that operators have agreed on a global NAPTR record structure to recognize resources of other network based on FQDN such as msc-s.operator.com. If these are not used it is possible to make all steps 4 to 10 simultaneously and based on answers that the IWBF (210) gets, the IWBF (210) is able to choose the best option to establish a session. The skilled person will appreciate that common FQDN format is useful, not mandatory, for the present invention.

In the previous disclosure it was mentioned that the IWBF receives multiple NAPTR's, selects one of them for which it acquires an IP address and tries to form a connection to. This is repeated one after the other according to the priority list until the connection is established. Another possible situation is where the connections are tried to be made simultaneously. In this situation the IWBF receives multiple NAPTR's and acquires IP addresses for all of them. As a result of this, the connections can be formed substantially simultaneously. However, skilled person will appreciate that other procedures are possible as well, which still lead to the present solution. As an example, after the IWBF have received multiple NAPTR's, the IWBF is able to acquire IP addresses for all the NAPTR's even though the connections are tried to be established one after the other according to the priority list. This is not necessarily the most efficient case, but the purpose of this example was to show to skilled person that combining the aforementioned phases still leads to the present invention and therefore order of the phases should not be considered a limitation for this invention. In addition, the skilled person will appreciate that term "multiple" stands for "more than one" for the present invention. If only one NAPTR record is received, then only one IP address is acquired and a connection is established to that address.

The foregoing detailed description is provided for clarity of understanding only, and should not be interpreted as restrictive to the invention presented in the claims herein below.

## Claims

1. An apparatus (210) for forming a voice connection to a receiving node (230, 240, 250, 260) in an inter-operator interconnection environment comprising a mixture of different protocols suitable for voice transmission, one of the protocols being SS7, **characterized in that**, the apparatus (210) is configured
• to receive a telephone number from an originating node (200)
• to receive, as a response to an ENUM query performed to said telephone number, multiple NAPTR records, each corresponding to a receiving node (230, 240, 250, 260)
• to select a receiving node to which the voice connection is to be established from the group of receiving nodes (230, 240, 250, 260) pointed by the NAPTR records, wherein said selection is based on rules set on a table the apparatus (210) has access to.

2. An apparatus (210) according to claim 1, **characterized in that** the apparatus (210) is capable of determining a priority order for the receiving nodes (230, 240, 250, 260) by means of the NAPTR records and the apparatus (210) is able to select the receiving node (230, 240, 250, 260) to which the connection is to be established based on the priority order.

3. An apparatus (210) according to claim 2, **characterized in that** the apparatus (210) is capable of going through the NAPTR records one after the other according to the priority order.

4. An apparatus (210) according to any of the claims 1 to 3, **characterized in that** the apparatus (210) is capable of intercepting the telephone number from the originating node (200) or detecting the received telephone number from signalling received from the originating node (200), said signalling comprising at least one of the following: ENUM/DNS query, SIP INVITE, responses.

5. An apparatus (210) according to any of the claims 1 to 4, **characterized in that** the apparatus (210) is located between service nodes and inter-operator network or within a carrier providing the inter-operator network.

6. An apparatus (210) according to any of the claims 1 to 5, **characterized in that** the apparatus (210) is configured to determine an IP address for a receiving node by means of the NAPTR record.

7. A method for forming a voice connection to a receiving node (230, 240, 250, 260) in an inter-operator interconnection environment comprising a mixture of different protocols suitable for voice transmission, one of the protocols being SS7, **characterized in that**, the method comprises
• receiving a telephone number from an originating node (200)
• as a response to an ENUM query performed for said telephone number receiving multiple NAPTR records , each corresponding to a receiving node (230, 240, 250, 260)
• selecting a receiving node to which the voice connection is to be established from the group of the receiving nodes (230, 240, 250, 260) pointed by the NAPTR records, wherein said selection is based on rules set on a table being accessed to.

8. A method according to claim 7, **characterized by** determining a priority order for the receiving nodes by means of the NAPTR records.

9. A method according to claim 8, **characterized by** selecting the receiving node to which the connection is to be established based on the priority order.

10. A method according to any of the claims 7 to 9, **characterized by** going through the receiving nodes substantially simultaneously.

11. A method according to claim 8 or 9, **characterized by** going through the NAPTR records one after the other according to the priority order.

12. A method according to any of the claims 7 to 11, **characterized by** intercepting the telephone number from the originating node.

13. A method according to any of the claims 7 to 12, **characterized by** detecting the received telephone number i from signalling comprising at least one of the following: ENUM/DNS query, SIP INVITE, responses.

14. A method according to any of the claims 7 to 13, **characterized by** determining an IP address for a receiving node by means of the NAPTR record.

## Patentansprüche

1. Vorrichtung (210) zur Bildung einer Sprachverbindung zu einem Empfangsknoten (230, 240, 250, 260) in einer Leitungsverbindungsumgebung zwischen Netzbetreibern, aufweisend eine Mischung von verschiedenen Protokollen, die zur Sprachübertragung geeignet sind, wobei eines der Protokolle das SS7 ist, **dadurch gekennzeichnet, dass** die Vorrichtung (210) dafür konfiguriert ist,
• eine Telefonnummer von einem Ausgangsknoten (200) zu empfangen,
• mehrere NAPTR-Aufnahmen als Reaktion auf eine ENUM-Anfrage an diese Telefonnummer zu empfangen, die jeweils einem Empfangsknoten (230, 240, 250, 260) entsprechen,
• aus der Gruppe von Empfangsknoten (230, 240, 250, 260), die von den NAPTR-Aufnahmen angezeigt werden, einen Empfangsknoten auszuwählen, zu dem die Sprachverbindung hergestellt werden soll, wobei die Auswahl auf Regeln basiert, die in einer Tabelle festgelegt sind, auf die die Vorrichtung (210) Zugriff hat.

2. Vorrichtung (210) nach Anspruch 1, **dadurch gekennzeichnet, dass** die Vorrichtung (210) in der Lage ist, mittels der NAPTR-Aufnahmen eine Prioritätsfolge für die Empfangsknoten (230, 240, 250, 260) zu bestimmen, und die Vorrichtung (210) in der Lage ist, auf Grund der Prioritätsfolge den Empfangsknoten (230, 240, 250, 260) auszuwählen, zu dem die Verbindung hergestellt werden soll.

3. Vorrichtung (210) nach Anspruch 2, **dadurch gekennzeichnet, dass** die Vorrichtung (210) in der Lage ist, die NAPTR-Aufnahmen gemäß der Prioritätsfolge nacheinander durchzugehen.

4. Vorrichtung (210) nach einem der Ansprüche 1 bis 3, **dadurch gekennzeichnet, dass** die Vorrichtung (210) in der Lage ist, die Telefonnummer von dem Ausgangsknoten (200) abzufangen oder die empfangene Telefonnummer durch eine von dem Ausgangsknoten (200) empfangene Signalisierung zu erkennen, wobei die Signalisierung mindestens eines der folgenden aufweist: eine ENUM/DNS-Anfrage, SIP INVITE, Antworten.

5. Vorrichtung (210) nach einem der Ansprüche 1 bis 4, **dadurch gekennzeichnet, dass** sich die Vorrichtung (210) zwischen Dienstknoten und einem Netzwerk zwischen Netzbetreibern oder innerhalb eines Betreibers, der das Netzwerk zwischen Netzbetreibern bereitstellt, befindet.

6. Vorrichtung (210) nach einem der Ansprüche 1 bis 5, **dadurch gekennzeichnet, dass** die Vorrichtung (210) dafür konfiguriert ist, mittels der NAPTR-Aufnahme eine IP-Adresse für einen Empfangsknoten zu bestimmen.

7. Verfahren zur Bildung einer Sprachverbindung zu einem Empfangsknoten (230, 240, 250, 260) in einer Leitungsverbindungsumgebung zwischen Netzbetreibern, aufweisend eine Mischung von verschiedenen Protokollen, die zur Sprachübertragung geeignet sind, wobei eines der Protokolle das SS7 ist, **dadurch gekennzeichnet, dass** das Verfahren aufweist:
• das Empfangen einer Telefonnummer von einem Ausgangsknoten (200),
• als Reaktion auf eine ENUM-Anfrage für diese Telefonnummer das Empfangen mehrerer NAPTR-Aufnahme, die jeweils einem Empfangsknoten (230, 240, 250, 260) entsprechen,
• das Auswählen eines Empfangsknotens, zu dem die Sprachverbindung hergestellt werden soll, aus der Gruppe der Empfangsknoten (230, 240, 250, 260), die von den NAPTR-Aufnahmen angezeigt werden, wobei die Auswahl auf Regeln basiert, die in einer Tabelle festgelegt sind, auf die zugegriffen wird.

8. Verfahren nach Anspruch 7, **gekennzeichnet durch** das Bestimmen einer Prioritätsfolge für die Empfangsknoten **durch** die NAPTR-Aufnahmen.

9. Verfahren nach Anspruch 8, **gekennzeichnet durch** das Auswählen des Empfangsknotens, zu dem die Verbindung hergestellt werden soll, auf Grund der Prioritätsfolge.

10. Verfahren nach einem der Ansprüche 7 bis 9, **gekennzeichnet durch** das im Wesentlichen gleichzeitige Durchgehen der Empfangsknoten.

11. Verfahren nach Anspruch 8 oder 9, **gekennzeichnet durch** das Durchgehen der NAPTR-Aufnahmen nacheinander nach der Prioritätsfolge.

12. Verfahren nach einem der Ansprüche 7 bis 11, **gekennzeichnet durch** das Abfangen der Telefonnummer von dem Ausgangsknoten.

13. Verfahren nach einem der Ansprüche 7 bis 12, **gekennzeichnet durch** das Erkennen der empfangenen Telefonnummer i **durch** das Signalisieren, aufweisend mindestens eines der folgenden: eine ENUM/DNS-Anfrage, SIP INVITE, Antworten.

14. Verfahren nach einem der Ansprüche 7 bis 13, **gekennzeichnet durch** das Bestimmen einer IP-Adresse für einen Empfangsknoten **durch** die NAPTR-Aufnahme.

## Revendications

1. Appareil (210) destiné à la formation d'une connexion vocale avec un noeud de réception (230, 240, 250, 260) dans un environnement d'interconnexion entre opérateurs comprenant un mélange de différents protocoles appropriés pour une transmission vocale, l'un des protocoles étant SS7, **caractérisé en ce que** l'appareil (210) est configuré
• pour recevoir un numéro de téléphone provenant d'un noeud d'origine (200)
• pour recevoir, en réponse à une demande ENUM effectuée vers ledit numéro de téléphone, plusieurs enregistrements NAPTR, chacun correspondant à un noeud de réception (230, 240, 250, 260)
• pour sélectionner un noeud de réception avec lequel la connexion vocale doit être établie à partir du groupe de noeuds de réception (230, 240, 250, 260) indiqués par les enregistrements NAPTR, ladite sélection étant basée sur des règles fixées sur une table à laquelle l'appareil (210) a accès.

2. Appareil (210) selon la revendication 1, **caractérisé en ce que** l'appareil (210) est capable de déterminer un ordre de priorité pour les noeuds de réception (230, 240, 250, 260) au moyen des enregistrements NAPTR et l'appareil (210) est apte à sélectionner le noeud de réception (230, 240, 250, 260) avec lequel la connexion doit être établie sur la base de l'ordre de priorité.

3. Appareil (210) selon la revendication 2, **caractérisé en ce que** l'appareil (210) est capable de parcourir les enregistrements NAPTR les uns après les autres selon l'ordre de priorité.

4. Appareil (210) selon l'une quelconque des revendications 1 à 3, **caractérisé en ce que** l'appareil (210) est capable d'intercepter le numéro de téléphone provenant du noeud d'origine (200) ou de détecter le numéro de téléphone reçu à partir d'une signalisation reçue en provenance du noeud d'origine (200), ladite signalisation comprenant au moins l'un des éléments suivants : demande ENUM/DNS, SIP INVITE, réponses.

5. Appareil (210) selon l'une quelconque des revendications 1 à 4, **caractérisé en ce que** l'appareil (210) est situé entre les noeuds de service et le réseau entre opérateurs ou à l'intérieur d'un opérateur fournissant le réseau entre opérateurs.

6. Appareil (210) selon l'une quelconque des revendications 1 à 5, **caractérisé en ce que** l'appareil (210) est configuré pour déterminer une adresse IP pour un noeud de réception au moyen de l'enregistrement NAPTR.

7. Procédé destiné à la formation d'une connexion vocale avec un noeud de réception (230, 240, 250, 260) dans un environnement d'interconnexion entre opérateurs comprenant un mélange de différents protocoles appropriés pour une transmission vocale, l'un des protocoles étant SS7, **caractérisé en ce que** le procédé comprend
• la réception d'un numéro de téléphone provenant d'un noeud d'origine (200)
• en réponse à une demande ENUM effectuée pour ledit numéro de téléphone, la réception de plusieurs enregistrements NAPTR, chacun correspondant à un noeud de réception (230, 240, 250, 260)
• la sélection d'un noeud de réception avec lequel la connexion vocale doit être établie à partir du groupe de noeuds de réception (230, 240, 250, 260) indiqués par les enregistrements NAPTR, ladite sélection étant basée sur des règles fixées sur une table qui est accessible.

8. Procédé selon la revendication 7, **caractérisé par** la détermination d'un ordre de priorité pour les noeuds de réception au moyen des enregistrements NAPTR.

9. Procédé selon la revendication 8, **caractérisé par** la sélection du noeud de réception avec lequel la connexion doit être établie sur la base de l'ordre de priorité.

10. Procédé selon l'une quelconque des revendications 7 à 9, **caractérisé par** le fait de parcourir les noeuds de réception de manière quasiment simultanée.

11. Procédé selon la revendication 8 ou 9, **caractérisé par** le fait de parcourir les enregistrements NAPTR les uns après les autres selon l'ordre de priorité.

12. Procédé selon l'une quelconque des revendications 7 à 11, **caractérisé par** le fait d'intercepter le numéro de téléphone provenant du noeud d'origine.

13. Procédé selon l'une quelconque des revendications 7 à 12, **caractérisé par** le fait de détecter le numéro de téléphone reçu i à partir d'une signalisation comprenant au moins l'un des éléments suivants : demande ENUM/DNS, SIP INVITE, réponses.

14. Procédé selon l'une quelconque des revendications 7 à 13, **caractérisé par** le fait de déterminer une adresse IP pour un noeud de réception au moyen de l'enregistrement NAPTR.
